# EUROPÄISCHE PATENTSCHRIFT

(11) **EP 1 515 832 B1**
(45) Veröffentlichungstag und Bekanntmachung des Hinweises auf die Patenterteilung: **23.11.2005**
(21) Anmeldenummer: 04740456.1
(22) Anmeldetag: 30.06.2004
(51) Int. Cl.: B29C 55/02, B01L 3/00, B81B 1/00

(54) **VERFAHREN ZUM EINBRINGEN EINER INNENHÖHLUNG IN EIN SUBSTRAT**
METHOD FOR MAKING AN INNER CAVITY IN A SUBSTRATE
PROCEDE POUR FACONNER UNE CAVITE INTERNE DANS UN SUBSTRAT

(30) Priorität: 11.07.2003 DE 10331714
(43) Veröffentlichungstag der Anmeldung: 23.03.2005
(73) Patentinhaber: Micronas GmbH, 79108 Freiburg (DE)
(72) Erfinder: LEHMANN, Mirko, 79117 Freiburg (DE)
(74) Vertreter: Huwer, Andreas
(86) Internationale Anmeldenummer: PCT/EP2004/007074
(87) Internationale Veröffentlichungsnummer: WO 2005/007388

(56) Entgegenhaltungen:
- WO-A-02/100542
- US-A- 6 000 597
- US-A1- 2002 001 695
- US-A1- 2002 017 132

## Beschreibung

Die Erfindung betrifft ein Verfahren zum Einbringen einer Innenhöhlung in ein Substrat.

Ein derartiges Verfahren zum Einbringen einer Innenhöhlung in ein Substrat, die als Fluidikkanal dient, ist aus Armani, Deniz et al, Re-configurable Fluid Circuits by PDMS Elastomer Micromatching, 12th International Conference on MEMS, MEMS 99, Orland (1998), Seite 222-227 bekannt. Dabei wird zunächst in einem ersten Verfahrensschritt mit Hilfe eines Formwerkzeugs im Spritzgussverfahren eine PDMS-Schicht hergestellt, die an einer ihrer Flachseiten eine nuten- oder grabenförmige Vertiefung aufweist, die sich etwa parallel zur Ebene der PDMS-Schicht von einer Zuflussstelle zu einer Abflussstelle erstreckt. Dabei sind die Zuflussstelle und die Abflussstelle von den Rändern der PDMS-Schicht beabstandet. In einem zweiten Verfahrensschritt wird ein plattenförmiges Koppelstück aus Kunststoff hergestellt, das zwei Durchbrüche aufweist, von denen der eine in Gebrauchsstellung an der Zuflussstelle und der andere an der Abflussstelle angeordnet ist. An den Durchbrüchen weist das Koppelstück Anschlussstutzen zum Verbinden mit Fluidikleitungen auf. In einem dritten Verfahrensschritt werden die PDMS-Schicht und das plattenförmige Koppelstück mit ihren Flachseiten einander zugewandt derart übereinander angeordnet, dass die Durchbrüche an der Zufluss- bzw. Abflussstelle angeordnet sind und der zwischen den Durchbrüchen befindliche Bereich des Koppelstücks die nuten- oder grabenförmige Vertiefung überdeckt. Nachdem die PDMS-Schicht und das Koppelstück in dieser Lage relativ zueinander positioniert wurden, werden sie durch eine Bondverbindung fixiert. Das Verfahren ist jedoch noch relatv aufwendig. Insbesondere müssen mehrere Einzelteile hergestellt, relativ zuelander positioniert und dann miteinander verbunden werden.

Es besteht deshalb die Aufgabe, ein Verfahren der Eingangs genannten Art zu schaffen, das einfach und kostengünstig durchführbar ist.

Diese Aufgabe wird dadurch gelöst, dass das Substrat bereitgestellt wird, dass der Werkstoff des Substrats durch Aufbringen einer Zugspannung elastisch gedehnt wird, dass danach ein Oberflächenbereich des Substrats mit mindestens einer nuten- oder grabenförmigen Vertiefung versehen wird, die einander gegenüberliegende Seitenwände hat, von denen mindestens eine einen Überstand aufweist, der mit seiner am weitesten vorstehenden Stelle der gegenüberliegenden Seitenwand zugewandt ist, dass die Dehnung des Substrats in Richtung einer von dem Überstand zu der gegenüberliegenden Seitenwand verlaufenden Linie orientiert ist oder eine in diese Richtung orientierte Komponente aufweist, und dass die Dehnung durch Reduzieren oder Entfernen der Zugspannung zumindest teilweise derart rückgängig gemacht wird, dass der Überstand die gegenüberliegende Seitenwand berührt und zwischen der Berühungsstelle und dem Grund der nuten- oder grabenförmigen Vertiefung die Innenhöhlung gebildet wird.

Mit dem Verfahren ist es insbesondere möglich, auf einfache Weise Kavemen, Kammem oder Fluidikkanäle herzustellen. Gegebenenfalls ist es sogar möglich, vor dem Reduzieren des Abstands zwischen dem Überstand und der gegenüberliegenden Seitenwand mindestens ein Teilchen, wie z.B. ein Biomolekül, in die Vertiefung einzubringen, so dass dieses nach dem Reduzieren des Abstands in der Vertiefung gefangen oder eingesperrt ist. Das Verfahren kann auch dazu genutzt werden, ein in der Vertiefung angeordnetes Biomolekül gegen außerhalb der Vertiefung befindliche Teilen abzuschirmen und somit eine Kontaminierung des Biomoleküls mit den Teilchen zu vermeiden. Derartige Anwendungen sind vor allem in der DNA- oder Proteinanalytik von Bedeutung.

Nach dem Erzeugen der nuten- oder grabenförmigen Vertiefung wird die Größe der Struktur reduziert, indem die Zugspannung reduziert oder entfernt wird, so dass sich das Substrat zusammenzieht. Dabei verkleinem sich die Abmessungen der Vertiefung. Auf diese Weise lässt sich die Innenhöhlung in einer Größe herstellen, die kleiner ist als die kleinste StrukturgröBe, die mit dem für das Erzeugen der Vertiefung verwendeten Strukturierungsverfahren unmittelbar herstellbar ist. Das Verfahren ermöglicht es, die Größen von Strukturen, die mit unterschiedlichen, von der Größe nicht zueinander passenden Technologien hergestellt sind, aneinander anzupassen, so dass die mit diesen Technologien hergestellten Strukturen miteinander kombiniert werden können. Die aufgrund der Zugspannung in dem Substrat auftretende Dehnung, also die durch die Zugspannung bewirkte Längenänderung des Substrats dividiert durch die Abmessung des ungedehnten Substrats, kann mindestens 10%, ggf. mindestens 50%, eventuell mindestens 100%, insbesondere mindestens 200% und bevorzugt mindestens 1000% betragen.

Die vorstehend genannte Aufgabe kann auch dadurch gelöst werden, dass das Substrat bereitgestellt wird, wobei ein Oberflächenbereich des Substrats mit mindestens einer nuten- oder grabenförmigen Vertiefung versehen wird, die einander gegenüberliegende Seitenwände hat, von denen mindestens eine einen Überstand aufweist, der mit seiner am weitesten vorstehenden Stelle der gegenüberliegenden Seitenwand zugewandt ist, wobei danach auf den Werkstoff des Substrats eine in Richtung einer von dem Überstand zu der gegenüberliegenden Seitenwand verlaufenden Linie orientierte oder eine in diese Richtung orientierte Komponente aufweisende Druckspannung derart aufgebracht wird, dass der Überstand die gegenüberliegende Seitenwand berührt und zwischen der Berühungsstelle und dem Grund der nuten- oder grabenförmigen Vertiefung die Innenhöhlung gebildet wird.

Auch mit diesem Verfahren ist es möglich, auf einfache Weise Kavernen, Kammem oder Fluidikkanäle herzustellen. Dabei läßt sich eine derartige Struktur in einer Größe herstellen, die kleiner ist als die kleinste Strukturgröße, die mit dem für das Erzeugen der Struktur verwendeten Struktuierungsverfahren unmittelbar herstellbar ist.

Vorteilhaft ist, wenn das Substrat als Platte oder Folie ausgebildet ist und wenn der Werkstoff des Substrats durch zentrische Streckung in der Erstreckungsebene des Substrats radial zu einem vorzugsweise etwa mittig zu dem Substrat angeordneten Zentrum gedehnt und/oder gestaucht wird. Durch diese MaBnahme ist es möglich, die Abmessungen der nuten- oder grabenförmigen Vertiefung in ihrer Erstreckungsebene in quer zueinander verlaufenden Richtungen zu reduzieren, um diese zweidimensional zu verkleinern. Bei der Erzeugung der Struktur ist zu beachten, dass es sich bei der zentrischen Streckung um eine Abbildung handelt, bei der sich die Fläche nichtlinear zu der Dehnung verändert. Auch kann es zu einer ungleichmäßigen Dehnung des Substrats kommen, wenn die Zug- und/oder Druckspannung ungleichmäßig oder unsymmetrisch in das Substrat eingebracht wird. Die gegenüber der herzustellenden Struktur vergrößerte Struktur muss dann entsprechend verzerrt auf dem Substrat erzeugt werden, um diese Ungleichmßigkeiten zu kompensieren.

Bei einer anderen Ausführungsform des Verfahrens wird der Werkstoff des Substrats durch eindimensionale Streckung in der Erstreckungsebene des Substrats gedehnt und/oder gestaucht. Das Substrat wird also in einer Richtung gegen die Rückstellkraft seines Werkstoffs lang gezogen bzw. zusammengedrückt. Bei diesem Verfahren ist bei einem homogenen Substrat mit über seine Erstreckungsebene konstanter Dicke die Veränderung des Flächenmaßstabs über die Fläche des Substrats konstant.

Bei einer vorteilhaften Ausführungsform der Erfindung wird auf den Oberflächenbereich, insbesondere in der nuten- oder grabenförmigen Vertiefung, eine Beschichtung aufgebracht, vorzugsweise derart, dass die Beschichtung eine Vielzahl von matrixförmig nebeneinander angeordneten, unterschiedlichen Beschichtungsbereichen aufweist Eine derartige Beschichtung kann durch Bedrucken des Substrats einfach und kostengünstig auf dem Substrat erzeugt werden.

Besonders vorteilhaft ist, wenn zum Beschichten des Substrats mindestens eine Lösung auf das Substrat aufgebracht wird, die wenigstens einen in einem Lösungsmittel gelösten Feststoff enthält, und wenn das Lösungsmittel danach von der Oberfläche des Substrats entfernt wird, derart, dass der Feststoff als Beschichtung zurückbleibt. Das Entfernen des Lösungsmittels erfolgt vorzugsweise nach dem Reduzieren oder Entfernen der Zugspannung bzw. nach dem Aufbringen der Druckspannung. Dadurch wird vermieden, dass bei dem Schrumpfungsprozess mechanische Spannungen in die Struktur und/oder über die Struktur in das Substrat eingebracht werden. Die Lösung kann durch Besprühen, beispielsweise mit Hilfe eines Strahldruckers, oder durch Bedrucken im Hochdruck, Tiefdruck und/oder Tampondruck auf das Substrat aufgebracht werden. Der Feststoff kann eine wasserlösliche organische und/oder anorganische chemische Substanz sein oder eine solche enthalten, wie sie beispielsweise in der kombinatorischen Chemie verwendet wird.

Bei einer bevorzugten Ausführungsform der Erfindung wird vorzugsweise in der nuten- oder grabenförmigen Vertiefung mindestens ein Biomolekül auf das Substrat aufgebracht, das vorzugsweise an diesem anbindet. Das Biomolekül kann Nukleinsäuren oder Derivate davon (DNA, RNA, PNA, LNA, Oligonukleotide, Plasmide, Chromosomen), Peptide, Proteine (Enzym, Protein, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und/oder Lipide umfassen. Als Lösungsmittel ist vorzugsweise Wasser vorgesehen. Das Verfahren ermöglicht es, derartige Biomoleküle ohne die Verwendung chemischer Substanzen auf der Oberfläche des Substrats zu immobilisieren. Das Biomolekül kann kovalent oder nicht kovalent immobilisiert werden. Das mindestens ein Biomolekül wird vorzugsweise vor dem Reduzieren oder Entfernen der Zugspannung und/oer der Aufbringen der Druckspannung auf dem Substrat angeordnet. Da sich das Substrat nach dem Reduzieren oder Entfernen der Zugspannung zusammenzieht und/oder beim Komprimieren verkleinert, reduziert sich die Fläche, auf der die Biomoleküle immobilisiert sind. Da die Menge der Biomoleküle konstant bleibt, nimmt dabei die Intensität bzw. Konzentration (Anzahl der Teilchen pro Fläche) der Biomoleküle zu.

Vorteilhaft ist, wenn das Substrat aus einem optisch transparenten Werkstoff besteht. Das Verfahren kann dann besonders gut zum Herstellen eines Fluidikkanals oder einer Kaveme verwendet werden, in der ein Fluid angeordnet wird, das durch den transparenten Werkstoff hindurch mit einem optischen Sensor untersucht wird.

Bei einer zweckmäßigen Ausführungsform des Verfahrens enthält das Substrat mindestens ein Elastomer, insbesondere Polypyrrol, Polyacetylen und/oder Polymethylsiloxane (PDMS). Derartige Substate sind aus Eung Ju Oh et al, Electrochemical synthesis and characterization of strechable polypryrrole films, Molecular Crystals an Liquid Crystals, Band 371, Seite 243 ff. (2001), Akoi, Y., Current progress in synthesis of polyacetylene films, Synthetic Metals, Band 84, Nr. 1-3, Seite 307 ff. (1. Jan. 1997) und Armani, Deniz et al., Re-configurable Fluid Circuits by PDMS Elastomer Micromatching, 12th International Conference on MEMS, MEMS 99, Orland (1998), Seite 222-227 bekannt und ermöglichen eine hohe elastische Dehnung bzw. Schrumpfung oder Stauchung.

Besonders vorteilhaft ist, wenn das Substrat nach dem Reduzieren oder Entfernen der Zugspannung und/oder nach dem Aufbringen der Druckspannung auf eine vorzugsweise in einen Halbleiterchip integrierte Detektionsvorrichtung aufgebracht wird, vorzugsweise derart, dass die Beschichtungsbereiche jeweils wenigstens einen Sensor der Detektionsvorrichtung abdecken. Mit diesem Verfahren lassen sich insbesondere Biochips, die eine Vielzahl von matrixförmig angeordneten Feldern aufweisen, in denen von Biomolekülen überdeckte Sensoren angeordnet sind, kostengünstig herstellen. Insbesondere kann aufgrund der durch den Schrumpfungsprozess reduzierten Abmessung(en) der auf dem Substrat erzeugten Struktur(en) teuere Chipfläche eingespart werden. Mit dem Verfahren kann der Abstand zwischen den Beschichtungsbereichen oder den Biomolekülen um mindestens 10%, ggf. um mindestens ein Drittel, eventuell um mindestens die Hälfte, insbesondere um mindestens zwei Drittel und vorzugsweise um mindestens 90% reduziert werden.

Bei einer vorteilhaften Ausgestaltung der Erfindung wird die nuten- oder grabenförmige Vertiefung mit Hilfe wenigstens eines Photolithographieschritts auf dem Substrat erzeugt. Dabei können mit dem Verfahren Innenhöhlungen erzeugt werden, die kleiner sind, als dies die Wellenlänge des verwendeten Uchts eigentlich erlauben würde. Wenn beispielsweise die kleinste bei direkter Anwendung der Lithographie noch herstellbare Strukturgröße 100 nm beträgt und sich die Abmessungen des Substrats und des Querschnitts der darauf erzeugten nuten- oder grabenförmigen Vertiefung nach dem Reduzieren oder Entfernen der Zugspannung und/oder dem Aufbringen der Druckspannung auf ein Zehntel reduziert, weist die. Innenhöhlung eine Querschnittsabmessung von nur noch etwa 10 nm auf Derart kleine Strukturen waren bisher mit Lithographieverfahren nicht herstellbar. Die Strukturen können eine optische, elektrische und/oder biochemische Funktion aufweisen.

Bei einer bevorzugten Ausführungsform des Verfahrens enthält das Substrat einen Keramikwerkstoff, vorzugsweise tetragonales Zirkoniumoxid, Magnesiumaluminiumoxid-Spinel, und/oder Alpha-Aluminiumoxid. Ein derartiger keramischer Werkstoff ist in B.-N. Kim et al., A high-strain-rate superelastic ceramic, Nauture, Band 413, Seite 288 (20.09.2001) beschrieben. Mit dem Verfahren lassen sich also auch Keramiksubstrate strukturieren, weshalb das Verfahren auch in der Mikrosystemtechnik zur Anwendung kommen kann.

Nachfolgend ist ein Ausführungsbeispiel der Erfindung anhand der Zeichnung näher erläutert. Es zeigen:
- Fig. 1: einen Querschnitt durch ein Substrat, das durch Aufbringen einer Zugspannung gedehnt wurde,
- Fig. 2: einen Querschnitt durch das in Fig. 1 gezeigte Substrat nach dem Erzeugen einer dreidimensionalen Struktur, und
- Fig. 3: das in Fig. 2 gezeigte Substrat nach dem Entfernen der Zugspannung.

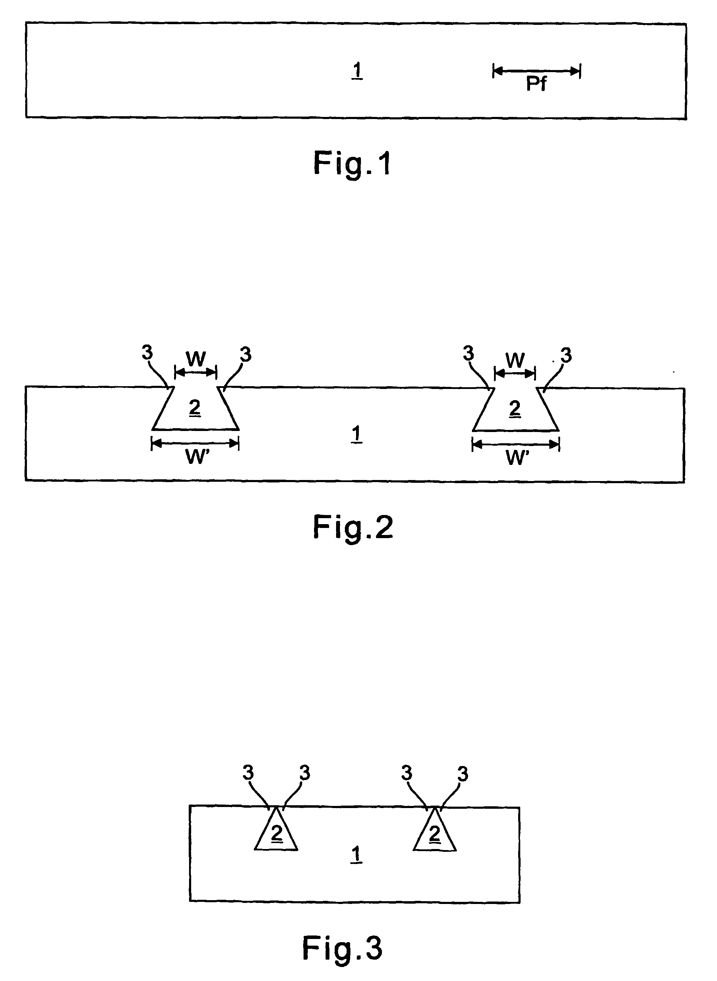

Bei einem Verfahren zum Einbringen einer Innenhöhlung in ein Substrat wird zunächst ein plattenförmiges Substrat 1 aus transparentem Polymethylsiloxane (PDMS) bereitgestellt, das in der Erstreckungsebene der Substratplatte durch Erzeugen einer Zugspannung in dem Werkstoff des Substrats 1 in Richtung des Doppelpfeils Pf eindimensional gedehnt wird (Fig. 1).

Danach werden in die Oberfläche des Substrats 1 nutenförmige Vertiefungen 2 eingebracht (Fig. 2), die sich quer zu der Richtung Pf der Zugspannung erstrecken. Dies kann beispielsweise in der Weise geschehen, dass auf die Oberfläche des Substrats 1 eine gegen ein Ätzmittel beständige Maske aufgebracht wird, die an den Stellen, an denen die Vertiefungen 2 erzeugt werden sollen, Unterbrechungen aufweist. Danach wird das auf diese Weise maskierte Substrat 1 mit Ätzmittel in Berührung gebracht, um im Bereich der Unterbrechungen Werkstoff von dem Substrat 1 abzutragen. Selbstverständlich können die Vertiefungen aber auch mit anderen bekannten Techniken in dem Substrat 1 erzeugt werden, beispielsweise mit Hilfe der UGA-TechniK mittels eines Formwerkzeugs und/oder durch spanende Bearbeitung.

In Fig. 2 ist erkennbar, dass die Vertiefungen 2 derart in das Substrat 1 eingebracht werden, dass die in Erstreckungsrichtung der Vertiefung 2 verlaufenden Seitenwände der Vertiefungen 2 Überstände 3 bilden, die in Richtung auf die gegenüberliegende Seitenwand bzw. den gegenüberliegenden Überstand 3 vorstehen. Bei dem Ausführungsbeispiel nach Fig. 2 weisen die Vertiefungen 2 jeweils einen etwa schwalbenschwanzförmigen Querschnitt auf. Es sind aber auch andere Querschnittsformen denkbar. Deutlich ist erkennbar, dass die lichte Weite W der Vertiefungen 2 jeweils an der Oberfläche des Substrats 1 kleiner ist als die lichte Weite W' am Grund der Vertiefung 2.

Nachdem die Struktur durch Einbringen der Vertiefungen 2 in dem Substrat 1 erzeugt wurde, wird die Zugspannung entfernt oder zumindest reduziert. Dadurch zieht sich der Werkstoff des Substrats 1, in den Bereichen, die der Zugspannung ausgesetzt waren, zusammen. Da die Überstände 3 praktisch zugspannungsfrei waren, behalten im Wesentlichen ihre Form bei. Die Lichte Weite W zwischen den einander gegenüberliegenden Überständen 3 ist derart auf die Zugspannung und den Elastizitätsmodul des Substrat-Werkstoffs abgestimmt, dass sich nach dem Reduzieren oder Entfernen der Zugspannung die am weitesten vorstehenden Stellen der beidseits der Vertiefung 2 befindlichen Überstände 3 berühren, so dass die Vertiefungen Kanäle bilden, die am Umfang geschlossenen sind (Fig. 3). Die Kanäle können für mikrofluidische Anwendungen oder Drucksensoren verwendet werden.

Bei dem Verfahren zur Strukturierung der Oberfläche eines Substrats 1 wird also ein Substrat 1 bereitgestellt und danach wird an einem Oberflächenbereich des Substrats 1 die Struktur erzeugt. Der Werkstoff des Substrats 1 wird durch Aufbringen einer Zugspannung derart elastisch gedehnt, dass sich der zu strukturierende Oberflächenbereich vergrößert. Danach wird der Oberflächenbereich mit einer Struktur versehen, die gegenüber der herzustellenden Struktur vergrößert ist. Dann wird die Dehnung durch Reduzieren oder Entfernen der Zugspannung zumindest teilweise rückgängig gemacht, derart, dass sich die Größe der Struktur auf die Größe der herzustellenden Struktur reduziert.

Es besteht auch die Möglichkeit, dass der Oberflächenbereich mit einer Struktur versehen wird, die gegenüber der herzustellenden Struktur vergrößert ist, und dass danach der Werkstoff des Substrats 1 durch Aufbringen einer Druckspannung derart elastisch gestaucht wird, dass sich die Größe der Struktur auf die Größe der herzustellenden Struktur reduziert.

Die Struktur wird derart erzeugt, dass sie mindestens eine vorzugsweise nuten- oder grabenförmige Vertiefung aufweist und wenigstens eine Seitenwand der Vertiefung einen Überstand hat, der mit seiner am weitesten vorstehenden Stelle einer gegenüberliegenden Seitenwand der Vertiefung zugewandt ist. Die Dehnung und/oder Stauchung des Substrats ist in Richtung einer von dem Überstand zu der gegenüberliegenden Seitenwand verlaufenden Linie orientiert oder weist eine in diese Richtung orientierte Komponente auf. Der Abstand zwischen dem Überstand und der gegenüberliegenden Seitenwand wird vorzugsweise derart auf die Zugspannung und/oder Druckspannung und den Elastizitätsmodul des Substrat-Werkstoffs abgestimmt ist, dass nach dem Reduzieren oder Entfernen der Zugspannung und/oder nach dem Aufbringen der Druckspannung der Überstand die gegenüberliegende Seitenwand berührt.

## Patentansprüche

1. Verfahren zum Einbringen einer Innenhöhlung in ein Substrat (1), wobei das Substrat (1) bereitgestellt wird, wobei der Werkstoff des Substrats (1) durch Aufbringen einer Zugspannung elastisch gedehnt wird, wobei danach ein Oberflächenbereich des Substrats (1) mit mindestens einer nuten- oder grabenförmigen Vertiefung versehen wird, die einander gegenüberliegende Seitenwände hat, von denen mindestens eine einen Überstand aufweist, der mit seiner am weitesten vorstehenden Stelle der gegenüberliegenden Seitenwand zugewandt ist, wobei die Dehnung des Substrats in Richtung einer von dem Überstand zu der gegenüberliegenden Seitenwand verlaufenden Linie orientiert ist oder eine in diese Richtung orientierte Komponente aufweist, und wobei die Dehnung durch Reduzieren oder Entfernen der Zugspannung zumindest teilweise derart rückgängig gemacht wird, dass der Überstand die gegenüberliegende Seitenwand berührt und zwischen der Berühungsstelle und dem Grund der nuten- oder grabenförmigen Vertiefung die Innenhöhlung gebildet wird.

2. Verfahren zum Einbringen einer Innenhöhlung in ein Substrat (1), wobei das Substrat (1) bereitgestellt wird, wobei ein Oberflächenbereich des Substrats (1) mit mindestens einer nuten- oder grabenförmigen Vertiefung versehen wird, die einander gegenüberliegende Seitenwände hat, von denen mindestens eine einen Überstand aufweist, der mit seiner am weitesten vorstehenden Stelle der gegenüberliegenden Seitenwand zugewandt ist, wobei danach auf den Werkstoff des Substrats (1) eine in Richtung einer von dem Überstand zu der gegenüberliegenden Seitenwand verlaufenden Linie orientierte oder eine in diese Richtung orientierte Komponente aufweisende Druckspannung derart aufgebracht wird, dass der Überstand die gegenüberliegende Seitenwand berührt und zwischen der Berühungsstelle und dem Grund der nuten- oder grabenförmigen Vertiefung die Innenhöhlung gebildet wird.

3. Verfahren nach Anspruch 1 oder 2, **dadurch gekennzeichnet, dass** das Substrat (1) als Platte oder Folie ausgebildet ist und dass der Werkstoff des Substrats (1) durch zentrische Streckung in der Erstreckungsebene des Substrats (1) radial zu einem vorzugsweise etwa mittig zu dem Substrat (1) angeordneten Zentrum gedehnt und/oder gestaucht wird.

4. Verfahren nach einem der Ansprüche 1 bis 3, **dadurch gekennzeichnet, dass** der Werkstoff des Substrats (1) durch eindimensionale Streckung in der Erstreckungsebene des Substrats (1) gedehnt und/oder gestaucht wird.

5. Verfahren nach einem der Ansprüche 1 bis 4, **dadurch gekennzeichnet, dass** auf den Oberflächenbereich, insbesondere in der nuten- oder grabenförmigen Vertiefung, eine Beschichtung aufgebracht wird, vorzugsweise derart, dass die Beschichtung eine Vielzahl von matrixförmig nebeneinander angeordneten, unterschiedlichen Beschichtungsbereichen aufweist.

6. Verfahren nach einem der Ansprüche 1 bis 5, **dadurch gekennzeichnet, dass** zum Beschichten des Substrats (1) mindestens eine Lösung auf das Substrat (1) aufgebracht wird, die wenigstens einen in einem Lösungsmittel gelösten Feststoff enthält, und dass das Lösungsmittel danach von der Oberfläche des Substrats (1) entfernt wird, derart, dass der Feststoff als Beschichtung zurückbleibt.

7. Verfahren nach einem der Ansprüche 1 bis 6, **dadurch gekennzeichnet, dass** vorzugsweise in der nuten- oder grabenförmigen Vertiefung mindestens ein Biomolekül auf das Substrat (1) aufgebracht wird, das vorzugsweise an diesem anbindet.

8. Verfahren nach einem der Ansprüche 1 bis 7, **dadurch gekennzeichnet, dass** das Substrat (1) aus einem optisch transparenten Werkstoff besteht.

9. Verfahren nach einem der Ansprüche 1 bis 8, **dadurch gekennzeichnet, dass** das Substrat (1) mindestens ein Elastomer enthält, insbesondere Polypyrrol, Polyacetylen und/oder Polymethylsiloxane (PDMS).

10. Verfahren nach einem der Ansprüche 1 bis 9, **dadurch gekennzeichnet, dass** das Substrat (1) nach dem Reduzieren oder Entfernen der Zugspannung und/oder nach dem Aufbringen der Druckspannung auf eine vorzugsweise in einen Halbleiterchip integrierte Detektionsvorrichtung aufgebracht wird, vorzugsweise derart, dass die Beschichtungsbereiche jeweils wenigstens einen Sensor der Detektionsvorrichtung abdecken.

11. Verfahren nach einem der Ansprüche 1 bis 10, **dadurch gekennzeichnet, dass** die nuten- oder grabenförmige Vertiefung mit Hilfe wenigstens eines Photolithographieschritts auf dem Substrat (1) erzeugt wird.

12. Verfahren nach einem der Ansprüche 1 bis 11, **dadurch gekennzeichnet, dass** als Substrat (1) einen Keramikwerkstoff enthält, vorzugsweise tetragonales Zirkoniumoxid, Magnesiumaluminiumoxid-Spinel und/oder Alpha-Aluminiumoxid.

## Claims

1. Method for introducing an internal cavity into a substrate (1), in which the substrate (1) is provided, in which the material of the substrate (1) is elastically stretched by the application of a tensile stress, in which a surface region of the substrate (1) is then provided with at least one groove-shaped or trench-shaped recess which has opposite side walls, at least one of which has an overhang, which at its furthest projecting point faces the opposite side wall, in which the stretching of the substrate is oriented in the direction of a line running from the overhang to the opposite side wall or has a component oriented in this direction, and in which the stretching is at least partially caused to recede by reducing or removing the tensile stress, in such a manner that the overhang touches the opposite side wall and the internal cavity is formed between the contact location and the base of the groove-shaped or trench-shaped recess.

2. Method for introducing an internal cavity into a substrate (1), in which the substrate (1) is provided, in which a surface region of the substrate (1) is provided with at least one groove-shaped or trench-shaped recess which has opposite side walls, at least one of which has an overhang, the furthest projecting point of which faces the opposite side wall, in which thereafter a compressive stress which is oriented in the direction of a line running from the overhang to the opposite side wall or has a component oriented in this direction is applied to the material of the substrate (1) in such a manner that the overhang touches the opposite side wall and the internal cavity is formed between the contact location and the base of the groove-shaped or trench-shaped recess.

3. Method according to Claim 1 or 2, **characterized in that** the substrate (1) is in the form of a plate, foil or film, and **in that** the material of the substrate (1) is stretched and/or compressed radially with respect to a centre preferably arranged approximately in the middle of the substrate (1) by centric extension in the plane of extent of the substrate (1).

4. Method according to one of Claims 1 to 3, **characterized in that** the material of the substrate (1) is stretched and/or compressed by one-dimensional extension in the plane of extent of the substrate (1).

5. Method according to one of Claims 1 to 4, **characterized in that** a coating is applied to the surface region, in particular in the groove-shaped or trench-shaped recess, preferably in such a manner that the coating has a multiplicity of different coating regions arranged in matrix form next to one another.

6. Method according to one of Claims 1 to 5, **characterized in that** to coat the substrate (1), at least one solution which contains at least one solid dissolved in a solvent is applied to the substrate (1), and **in that** the solvent is then removed from the surface of the substrate (1), in such a manner that the solid remains in place as the coating.

7. Method according to one of Claims 1 to 6, **characterized in that** at least one biomolecule, which preferably bonds to the substrate (1), is applied to the substrate, preferably in the groove-shaped or trench-shaped recess.

8. Method according to one of Claims 1 to 7, **characterized in that** the substrate (1) consists of an optically transparent material.

9. Method according to one of Claims 1 to 8, **characterized in that** the substrate (1) contains at least one elastomer, in particular polypyrrole, polyacetylene and/or polymethylsiloxane (PDMS).

10. Method according to one of Claims 1 to 9, **characterized in that** the substrate (1), after the tensile stress has been reduced or removed and/or after the compressive stress has been applied, is placed onto a detection apparatus, which is preferably integrated in a semiconductor chip, for preference in such a manner that the coating regions in each case cover at least one sensor of the detection apparatus.

11. Method according to one of Claims 1 to 10, **characterized in that** the groove-shaped or trench-shaped recess is produced on the substrate (1) with the aid of at least one photolithography step.

12. Method according to one of Claims 1 to 11, **characterized in that** the substrate (1) contains a ceramic material, preferably tetragonal zirconium oxide, magnesium aluminium oxide spinel and/or alpha-aluminium oxide.

## Revendications

1. Procédé pour façonner une cavité interne dans un substrat (1), dans lequel le substrat (1) est préparé, dans lequel le matériau du substrat (1) est allongé élastiquement par l'application d'une contrainte de traction, dans lequel ensuite une zone de la surface du substrat (1) est pourvue d'au moins un creux en forme de rainure ou de fosse, qui comporte des parois latérales opposées l'une à l'autre, dont au moins une présente un dépassement qui est orienté avec sa zone la plus saillante vers la paroi latérale opposée, dans lequel l'allongement du substrat est orienté dans la direction d'une ligne allant du dépassement vers la paroi latérale opposée ou présente une composante orientée dans cette direction, et dans lequel l'allongement est rendu au moins en partie réversible en réduisant ou en supprimant la contrainte de traction, de telle façon que le dépassement touche la paroi latérale opposée et que la cavité interne soit formée entre la zone de contact et le fond du creux en forme de rainure ou de fosse.

2. Procédé pour façonner une cavité interne dans un substrat (1), dans lequel le substrat (1) est préparé, dans lequel une zone de la surface du substrat (1) est pourvue d'au moins un creux en forme de rainure ou de fosse, qui comporte des parois latérales opposées l'une à l'autre, dont au moins une présente un dépassement qui est orienté avec sa zone la plus saillante vers la paroi latérale opposée, dans lequel une contrainte de compression orientée dans la direction d'une ligne allant du dépassement vers la paroi opposée ou présentant une composante orientée dans cette direction est appliquée au matériau du substrat (1), de telle façon que le dépassement touche la paroi latérale opposée et que la cavité interne soit formée entre la zone de contact et le fond du creux en forme de rainure ou de fosse.

3. Procédé selon la revendication 1 ou 2, **caractérisé en ce que** le substrat (1) est constitué par une plaque ou une feuille et **en ce que** le matériau du substrat (1) est allongé et/ou refoulé par étirage centré dans le plan d'extension du substrat (1) radialement vers un centre disposé de préférence environ au milieu du substrat (1).

4. Procédé selon l'une quelconque des revendications 1 à 3, **caractérisé en ce que** le matériau du substrat (1) est allongé et/ou refoulé par étirage unidimensionnel dans le plan d'extension du substrat (1).

5. Procédé selon l'une quelconque des revendications 1 à 4, **caractérisé en ce qu'**un revêtement est déposé sur la région de la surface, en particulier dans le creux en forme de rainure ou de fosse, de préférence de telle façon que le revêtement présente une pluralité de régions de revêtement différentes disposées les unes à côté des autres en forme de matrice.

6. Procédé selon l'une quelconque des revendications 1 à 5, **caractérisé en ce que**, pour le revêtement du substrat (1), on applique sur le substrat (1) au moins une solution qui contient au moins une substance solide dissoute dans un solvant, et **en ce que** le solvant est ensuite enlevé de la surface du substrat (1), de telle façon que la substance solide reste pour former le revêtement.

7. Procédé selon l'une quelconque des revendications 1 à 6, **caractérisé en ce que** l'on dépose sur le substrat (1), de préférence dans le creux en forme de rainure ou de fosse, au moins une biomolécule, qui se lie de préférence à celui-ci.

8. Procédé selon l'une quelconque des revendications 1 à 7, **caractérisé en ce que** le substrat (1) se compose d'un matériau optiquement transparent.

9. Procédé selon l'une quelconque des revendications 1 à 8, **caractérisé en ce que** le substrat (1) contient au moins un élastomère, en particulier du polypyrrole, du polyacétylène et/ou du polyméthylsiloxane (PDMS).

10. Procédé selon l'une quelconque des revendications 1 à 9, **caractérisé en ce que**, après la réduction ou la suppression de la contrainte de traction et/ou après l'application de la contrainte de compression, le substrat (1) est déposé sur un dispositif de détection intégré de préférence dans une puce à semi-conducteur, de préférence de telle façon que les régions de revêtement recouvrent chacune au moins un détecteur du dispositif de détection.

11. Procédé selon l'une quelconque des revendications 1 à 10, **caractérisé en ce que** le creux en forme de rainure ou de fosse est produit sur le substrat (1) à l'aide d'au moins une opération de photolithographie.

12. Procédé selon l'une quelconque des revendications 1 à 11, **caractérisé en ce que** le substrat (1) contient un matériau céramique, de préférence de l'oxyde de zirconium tétragonal, du spinelle d'oxyde de magnésium-aluminium et/ou de l'oxyde d'aluminium alpha.
